# EUROPÄISCHE PATENTSCHRIFT

(11) **EP 0 541 995 B1**
(45) Veröffentlichungstag und Bekanntmachung des Hinweises auf die Patenterteilung: **29.11.1995**
(21) Anmeldenummer: 92117880.2
(22) Anmeldetag: 20.10.1992
(51) Int. Cl.: B60H 1/00, F01P 3/20

(54) **Heizanlage für das Fahrerhaus eines Kraftfahrzeuges**
Driver's cab heating system for motor vehicle
Système de chauffage pour l'habitacle d'une voiture automobile

(30) Priorität: 14.11.1991 DE 4137415
(43) Veröffentlichungstag der Anmeldung: 19.05.1993
(73) Patentinhaber: MAN Nutzfahrzeuge Aktiengesellschaft, 80976 München (DE)
(72) Erfinder: Geiger, Franz, W-8047 Karlsfeld (DE)

(56) Entgegenhaltungen:
- EP-A- 0 292 373
- DE-A- 1 630 393
- DE-A- 3 826 778
- DE-U- 7 626 069
- DE-U- 9 013 459
- US-A- 3 523 644

## Beschreibung

Die Erfindung betrifft eine Heizanlage für das Fahrerhaus eines Kraftfahrzeuges, insbesondere eines Nutzfahrzeuges, mit einer einen Wärmetauscher beaufschlagenden Motor-Wasserpumpe und mit einem zur wahlweisen Anwendung über eine elektrische Wasserpumpe betriebenen Heizgerät.

Es sind Heizanlagen für Kraftfahrzeuge mit Magnet-Wasserventilen für die Wasserflußrichtung, z. B. zur wahlweisen Beheizung von Fahrerhaus oder Motor bekannt, auch Duo-Taktventile für die Mengenregelung und Temperaturregelung der Heizung. Nachteilig hierbei ist der hohe Wasserwiderstand sowie der ständige zusätzliche Stromverbrauch im Standbetrieb, mit Magnet- und Taktventilen als teuere Komponenten.

Der Erfindung liegt die Aufgabe zugrunde, eine optimale Kraftfahrzeugheizung für unterschiedliche Betriebszustände zu schaffen.

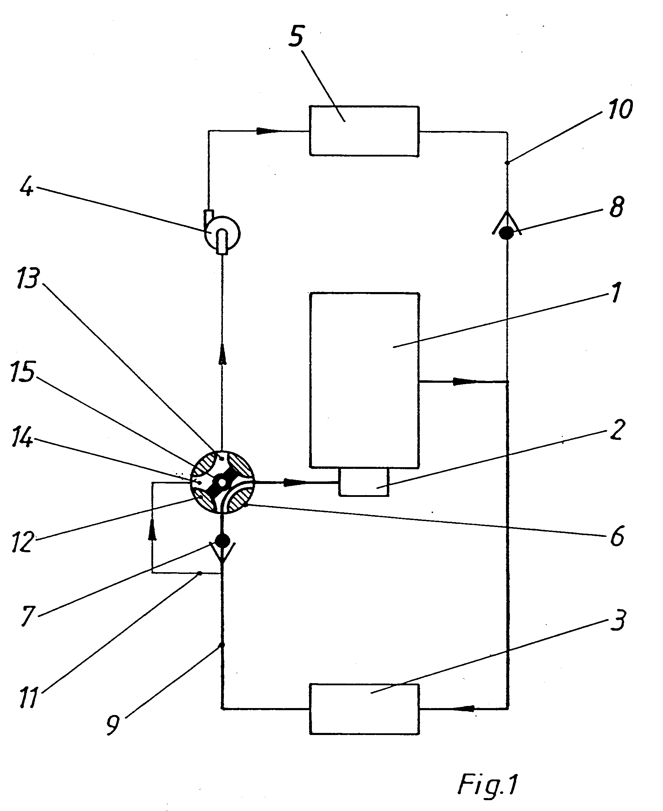

Dies wird erfindungsgemäß durch einen die beiden Heizkreisläufe verbindenden 4-Wege-Wassermischer, der in Stufen oder stufenlos verstellbar ist, erreicht, wobei vor dem 4-Wege-Wassermischer und hinter dem Heizgerät je ein Rückschlagventil angeordnet ist und in der Leitung vor dem Rückschlagventil und einem der Eingänge des 4-Wege-Wassermischers eine Bypassleitung vorgesehen ist. Solcherart und unter Verwendung des nach Anspruch 2 beschriebenen 4-Wege-Wassermischers mit integriertem oder vorgebauten Rückschlagventil können die Funktionen gemäß den Fig. 1 bis 4 von Hand, mit Stellmotor oder Druckluftzylinder einfach programmiert werden, wobei die Regelung auch stufenlos erfolgen kann.

Die Erfindung ist in einem Ausführungsbeispiel dargestellt und beschrieben. Es zeigen:
- Fig. 1 bis 4: schematische Darstellungen unterschiedlicher Betriebszustände eines Heizungssystemsfür Kraftfahrzeuge.

Fig. 1 zeigt einen Verbrennungsmotor 1 mit einer an ihm angeordneten Motor-Wasserpumpe 2. Diese ist über den Motor und Leitung 9 mit einem Wärmetauscher 3 verbunden. In einem weiteren Heizkreislauf 10 ist eine elektrische Wasserpumpe 4 und ein Heizgerät 5 vorgesehen. Beide Heizkreisläufe 9 und 10 sind an einen 4-Wege-Wassermischer 6 angekoppelt. Dem 4-Wege-Wassermischer 6 ist ein Rückschlagventil 7 vorgeschaltet. Ein weiteres Rückschlagventil 8 ist hinter dem Heizgerät 5 angeordnet. Vom Heizkreislauf 9 zweigt sich vor dem Rückschlagventil 7 eine Bypassleitung 11 ab, die zu einem Ein/Ausgang am Kanal 14 des 4-Wege-Wassermischers 6 führt. Der 4-Wege-Wassermischer 6 besteht aus einem Gehäuse 12 mit kreuzweise zueinander angeordneten Kanälen 13 und 14, die mit Dichtkanten versehen sind, und einem Radialschieber 15. Je nach Stellung des Radialschiebers 15 können die zwei Heizkreisläufe verbunden oder getrennt werden.

Gemäß Fig. 1 fördert die Motor-Wasserpumpe 2 das Heizwasser durch den Wärmetauscher 3, das Rückschlagventil 7 und den 4-Wege-Wassermischer zurück zur Motor-Wasserpumpe. Die elektrische Wasserpumpe 4 und das Heizgerät 5 sind ausgeschaltet. Durch Anordnung des Rückschlagventils 8 wird ein nachteiliger Nebenkreis (Motor, Heizgerät, elektrische Wasserpumpe, 4-Wege-Wassermischer, Saugleitung und wieder Motor-Wasserpumpe) vermieden. Solcherart erfolgt keine Auskühlung des Heizkreises durch Anwärmung des abgestellten Heizgerätes. Das Fahrerhaus wird in dieser Betriebsart nur durch den Motor beheizt.

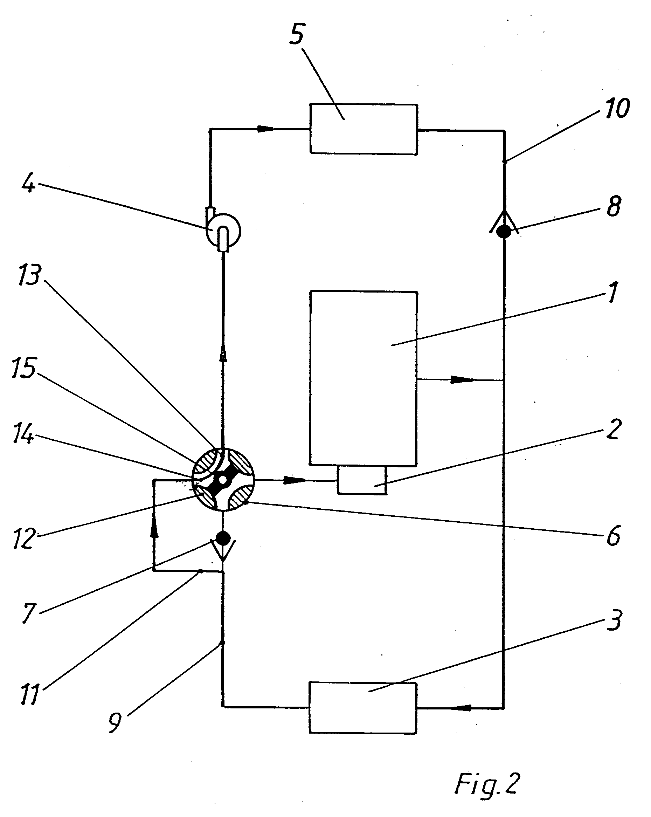

In der Funktion gemäß Fig. 2 wird durch zusätzliches Einschalten des Heizgerätes 5 und der elektrischen Wasserpumpe 4 der zweite Heizkreislauf 10 aktiviert, wobei der erste Heizkreislauf 9 abgebunden wird, indem der Wasserkreislauf über den Bypass 11 durch das gegen die Motor-Wasserpumpe 2 über den Radialschieber 15 gesperrte 4-Wege-Wassermischer 6 zur elektrischen Wasserpumpe 4 weiterfließt. In dieser Konstellation wird das Fahrerhaus nur durch das Heizgerät 5 beheizt. Durch Anordnung des Rückschlagventil 7 wird ein nachteiliger Nebenkreis von Heizkreis 9, Motor 1; Motor-Wasserpumpe 2, 4-WegeWassermischer 6 mit Einmischung in die Bypassleitung 11 vermieden. Solcherart erfolgt keine unerwünschte Mitbeheizung des Motors.

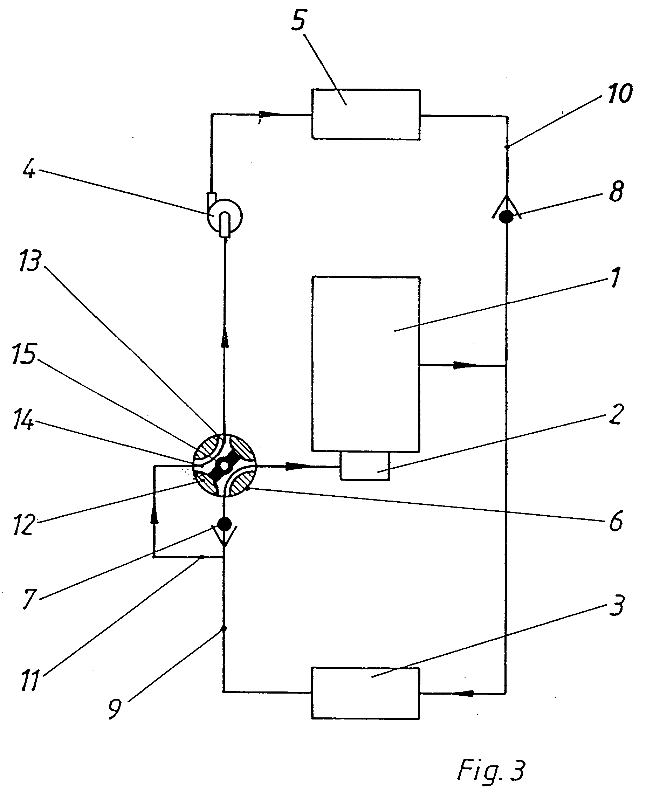

Gemäß der Konstellation nach Fig. 3 wird das Fahrerhaus durch den Motor 1 und das Heizgerät 5 gemeinsam beheizt. Dies wird erreicht, indem die elektrische Wasserpumpe 4 das Heizgerät 5 und der Motor 1 gleichzeitig eingeschaltet sind. Diese Betriebsart ist notwendig, wenn es gilt, sehr tiefe Temperaturen zu beherrschen.

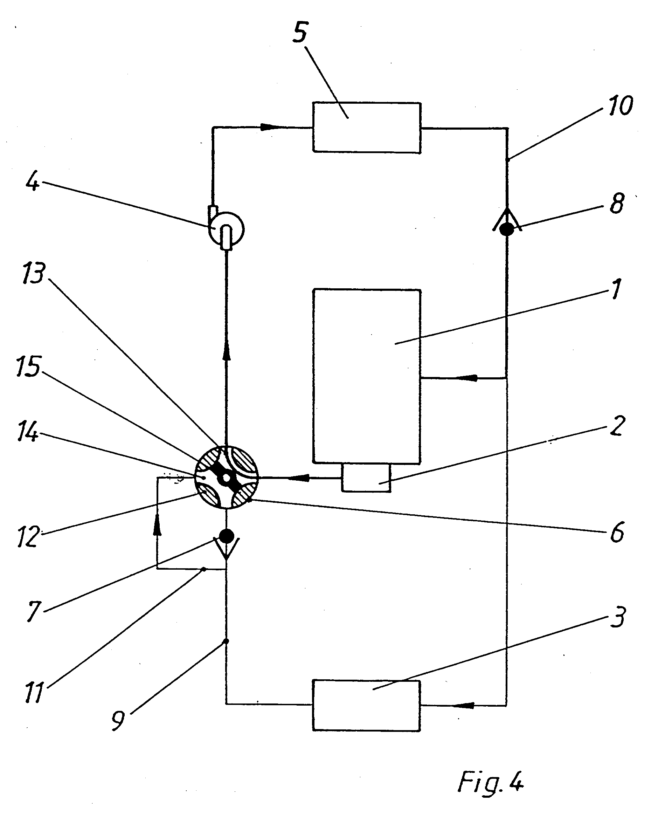

Gemäß Fig. 4 wird gegensätzlich zu den Fig. 1 bis 3 der Radialschieber 15 des 4-Wege-Wassermischers in eine um 90° versetzte Position gebracht, so daß der Durchlauf aus dem Heizkreislauf 9 gegen die Motor-Wasserpumpe 2 gesperrt ist. Die elektrische Wasserpumpe 4 und das Heizgerät 5 sind eingeschaltet. Solcherart wird bei Motorstillstand der Motor 1 durch das Heizgerät 5 beheizt, wodurch, insbesondere bei tiefen Temperaturen, ein problemloserer und schnellerer Start des Motors gewährleistet ist.

### Bezugszeichenliste

- 1: Verbrennungsmotor
- 2: Motor-Wasserpumpe
- 3: Wärmetauscher
- 4: elektrische Wasserpumpe
- 5: Heizgerät
- 6: 4-Wege-Wassermischer
- 7: Rückschlagventil
- 8: Rückschlagventil
- 9: Heizkreislauf
- 10: Heizkreislauf
- 11: Bypassleitung
- 12: Gehäuse von 6
- 13: Kanal in 12
- 14: Kanal in 12
- 15: Radialschieber

## Patentansprüche

1. Heizanlage für das Fahrerhaus eines Kraftfahrzeuges, insbesondere eines Nutzfahrzeuges, mit einer einen Wärmetausche (3) beaufschlagenden Motor-Wasserpumpe (2) und mit einem zur wahlweisen Anwendung über eine eleckrische Wasserpumpe (4) betriebenen Heizgerät (5), gekennzeichnet durch einen die beiden Heizkreisläufe (9, 10) verbindenden 4-Wege-Wassermischer (6), der in Stufen oder stufenlos verstellbar ist, wobei vor dem 4-WegeWassermischer (6) und hinter dem Heizgerät (5) je ein Rückschlagventil (7, 8) angeordnet ist und in der Leitung (9) vor dem Rückschlagventil (7) und einem Eingang des 4-Wege-Wassermischers (6) eine Bypassleitung (11) vorgesehen ist.

2. Heizanlage nach Anspruch 1, dadurch gekennzeichnet, daß der 4-Wege-Wassermischer (6) aus einem Gehäuse (12) mit zwei kreuzweise zueinander angeordneten Kanälen (13, 14) mit Dichtkanten und einem Radialschieber (15) besteht, wobei je nach Stellung des Radialschiebers (15) die zwei Heizkreisläufe (9, 10) verbunden oder getrennt sind.

3. Heizanlage nach Anspruch 1 oder 2, dadurch gekennzeichnet, daß der 4-Wege-Wassermischer (6) von Hand, mittels Stellmotor oder Druckluftzylinder einstellbar ist.

## Claims

1. Heating system for the cab of a motor vehicle, particularly a commercial vehicle, with an engine-powered water pump (2) charging a heat exchanger (3) and with a heating unit (5) driven via an electrical water pump (4) for optional use, characterised by a 4-way water mixer (6) that connects the two heating circuits (9, 10) and is adjustable in stages or infinitely, whereby check valves (7, 8) are arranged upstream of the 4-way water mixer (6) and downstream of the heating unit (5) respectively, and a bypass line (11) is fitted in the line (9) upstream of the check valve (7) and one inlet of the 4-way water mixer (6).

2. Heating system according to Claim 1, characterised in that the 4-way water mixer (6) consists of a housing (12) with two ducts (13, 14) with sealing edges and a radial slide (15), which ducts (13, 14) are arranged crosswise relative to each other, whereby the two heating circuits (9, 10) are either connected to each other or separated depending on the position of the radial slide (15).

3. Heating system according to Claim 1 or 2, characterised in that the 4-way water mixer (6) can be adjusted manually, by means of a servomotor or by means of a compressed-air cylinder.

## Revendications

1. Installation de chauffage de la cabine d'un véhicule automobile, notamment d'un véhicule utilitaire, comprenant une pompe à eau (2) du moteur, alimentant l'échangeur de chaleur (3) ainsi qu'un appareil de chauffage (5) fonctionnant à la demande au moyen d'une pompe à eau électrique (4), caractérisée en ce qu'elle comporte un mélangeur d'eau (6), à quatre voies reliant les deux circuits de chauffage (9, 10) et réglable par degrés ou en continu, deux soupapes antiretour étant montées l'une (7) en amont du mélangeur (6), l'autre (8), en aval de l'appareil de chauffage (5), tandis qu'une conduite de dérivation (11) est prévue entre la conduite (9), en amont de la soupape antiretour (7) et une des entrées du mélangeur à quatre voies (6).

2. Installation de chauffage selon la revendication 1, caractérisée en ce que le mélangeur (6), à quatre voies comprend un boîtier (12) percé de deux canaux (13, 14) qui se croisent le long de bords étanches, ainsi qu'une vanne radiale (15) qui, en fonction de sa position, relie ou sépare les deux circuits de chauffage (9, 10).

3. Installation de chauffage selon la revendication 1 ou 2, caractérisée en ce que le mélangeur (6) à quatre voies peut être commandé à la main, par un moteur de réglage ou par un vérin pneumatique.
